# EUROPÄISCHE PATENTSCHRIFT

(11) **EP 1 251 268 B1**
(45) Veröffentlichungstag und Bekanntmachung des Hinweises auf die Patenterteilung: **11.01.2017**
(21) Anmeldenummer: 02008952.0
(22) Anmeldetag: 22.04.2002
(51) Int. Cl.: F03D 1/00, F16D 1/033

(54) **Wellenkopplungsvorrichtung für eine Windkraftanlage**
Shaft coupling device for a windturbine
Dispositif de connexion des arbres d'une éolienne

(30) Priorität: 20.04.2001 DE 10119427
(43) Veröffentlichungstag der Anmeldung: 23.10.2002
(73) Patentinhaber: GENERAL ELECTRIC COMPANY, Schenectady, NY 12345 (US)
(72) Erfinder: Becker, Markus, 48149 Münster (DE); Weitkamp, Roland, 49191 Belm-Icker (DE); Schellings, Vincent, 7511 Enschede (NL)
(74) Vertreter: Zimmermann & Partner Patentanwälte mbB

(56) Entgegenhaltungen:
- GB-A- 651 188
- US-A- 4 708 692
- US-A- 4 757 211
- US-A- 5 545 090

## Beschreibung

Die Erfindung betrifft eine Kopplungsvorrichtung für eine Windkraftanlage mit einer mindestens ein Rotorblatt der Windkraftanlage tragenden Rotorwelle, einer koaxial zur Rotorwelle verlaufenden Getriebewelle und einer die Rotorwelle an die Getriebewelle koppelnden Kopplungseinrichtung.

Bei modernen Windkraftanlagen wird die Rotordrehung über die die Rotorblätter ggf. über eine daran befestigte Nabe tragende Rotorwelle auf die Eingangswelle eines Getriebes übertragen, deren Ausgangswelle mit einem Generator zur Stromerzeugung verbunden ist. Dabei sind das Getriebe und der Generator üblicherweise in einer drehbar an einem Turm der Windkraftanlage gelagerten Maschinengehäuse untergebracht. Die Höhe dieses Turms kann 100 m oder mehr betragen.

Falls während des Betriebs der Windkraftanlage Störungen im Bereich des Getriebes und/oder der Rotorwelle bzw. des Rotorlagers auftreten, muß die Rotorwelle von der Eingangswelle des Getriebes gelöst werden. Aus diesem Grund ist es erforderlich, daß die die Rotorwelle an die Getriebewelle koppelnde Kopplungseinrichtung so ausgelegt ist, daß die Getriebewelle schnell und einfach von der Rotorwelle gelöst werden kann. Darüber hinaus muß diese Kopplungseinrichtung auch eine störungsfreie Biegemoment- und Drehmomentübertragung von der einen Durchmesser von einem Meter oder mehr aufweisenden Rotorwelle auf die Getriebewelle ermöglichen. Bei bekannten Kopplungsvorrichtungen für Windkraftanlagen wird diese Biegemoment- und Drehmomentübertragung mit Hilfe von sog. Spannsätzen erreicht, mit denen die als Hohlwelle ausgebildete Getriebewelle in radialer Richtung auf die in die Getriebewelle eingesetzte Rotorwelle gepreßt wird. Allerdings bereitet die Lösung der mit diesen Spannsätzen bewirkten kraftschlüssigen Verbindung zwischen Rotorwelle und Getriebewelle in vielen Fällen Schwierigkeiten, weil sich die einzelnen Elemente der Spannsätze während des Betriebs der Windkraftanlage festziehen. Weiter ist es beim Einsatz dieser Spannsätze als problematisch anzusehen, daß zur Lösung des Getriebes von der Rotorwelle zunächst die Getriebewelle in horizontaler Richtung von der Rotorwelle getrennt werden muß, was bei Rotorwellen mit einem Durchmesser von einem Meter oder mehr und daran festgelegten Rotoren mit einem Durchmesser vom 70 m oder mehr und entsprechend dimensionierten Getriebewellen große Schwierigkeiten bereitet.

Zur Lösung dieser Probleme wurden bereits Drehmomentübertragungsvorrichtungen für Windkraftanlagen vorgeschlagen, bei denen das der Rotorwelle zugewandte Ende der Getriebewelle eine flanschartige radiale Erweiterung aufweist und die Kopplung der Getriebewelle an die Rotorwelle mit Hilfe von diese flanschartige Erweiterung durchsetzenden und in eine der Getriebewelle zugewandte Stirnfläche der Rotorwelle eingreifenden Schraubbolzen bewirkt wird. Dabei kann die Rotorwelle der bekannten Drehmomentübertragungsvorrichtungen auch noch einen oder mehr Aufnahmeräume zur Aufnahme eines Verbindungselementes zur rotationskraftschlüssigen Verbindung der Rotorwelle mit der Getriebewelle aufweisen, wobei entsprechende Aufnahmeräume auch in der Getriebewelle vorgesehen sind. Mit dieser Vorrichtung kann eine Lösung des Getriebes von der Getriebewelle ohne horizontale Verschiebung der Getriebewelle bezüglich dem Rotor erreicht werden, wodurch die Montage bzw. der Austausch von Getriebeteilen des Rotors und des Rotorlagers deutlich vereinfacht wird. Allerdings hat es sich gezeigt, daß die Lösung der in die Aufnahmeräume eingesetzten beispielsweise in Form von Passfedern ausgeführten Verbindungselemente insbesondere nach längeren Betriebszeiten der Windkraftanlage in vielen Fällen Schwierigkeiten bereitet, was wiederum zu Problemen bei der Trennung des Getriebes bzw. der Getriebewelle vom Rotor bzw. von der Rotorwelle führt.

Die US 4,757,211 beschreibt eine Windenergieanlage, bei der eine Rotorwelle und eine dazu koaxial verlaufende Getriebewelle miteinander gekoppelt sind.

Die GB 651,188 beschreibt eine Kopplungsvorrichtung, bei der eine erste Welle mit einer zweiten Welle über jeweilige Kupplungsflansche gekoppelt ist. Zwei Zentrierringe dienen zur Zentrierung der Wellen zueinander. Die Kupplungsflansche sind über Paßbolzen fest miteinander und mit den Zentrierringen verbunden. Für die Paßbolzen sind jeweilige Öffnungen in den Flanschen und den Zentrierringen vorgesehen. Jeder Bolzen ist mit einer Kronenmutter gesichert, die in einer jeweiligen Öffnung im Flansch aufgenommen ist.

Angesichts dieser Probleme im Stand der Technik liegt der Erfindung die Aufgabe zugrunde, eine Kopplungsvorrichtung für eine Windkraftanlage der vorstehend beschriebenen Art bereitzustellen, die eine weitere Erleichterung von Wartungsarbeiten sowie eine einfache Montage ermöglicht.

Erfindungsgemäß wird diese Aufgabe durch eine Weiterbildung der bekannten Kopplungsvorrichtungen gelöst, die im wesentlichen dadurch gekennzeichnet ist, daß die Kopplungseinrichtung mindestens ein mit einem zur Herstellung einer formschlüssigen Verbindung ausgelegten Befestigungselement lösbar an der Rotorwelle befestigtes Verbindungselement und ein zur Herstellung einer reibschlüssigen Verbindung zwischen dem Verbindungselement einerseits und einem weiteren Verbindungselement und/oder der Getriebewelle andererseits ausgelegtes Kopplungselement aufweist.

Diese Erfindung geht auf die Erkenntnis zurück, daß sich die eingangs erläuterten Probleme im Stand der Technik lösen lassen, wenn die Kopplung der Rotorwelle an die Getriebeweile in mindestens zwei Stufen erfolgt, wobei zunächst über eine mit großen Kräften beaufschlagbare, jedoch nur schwer wieder lösbare formschlüssige Verbindung ein Verbindungselement an die Rotorwelle angekoppelt wird, welches seinerseits über eine leicht lösbare aber im allgemeinen nur mit geringen Kräften beaufschlagbare reibschlüssige Verbindung an die Getriebewelle gekoppelt wird. Dabei kann die Kopplung des Verbindungselementes an die Getriebewelle ggf. über ein oder mehr weitere Verbindungselemente erfolgen. Zum Lösen der Getriebewelle von der Rotorwelle ist es lediglich erforderlich, die reibschlüssige Verbindung zu lösen, was üblicherweise keine Probleme bereitet, während eine Lösung der formschlüssigen Verbindung nur noch zum Austauschen des Wälzlagers der Rotorwelle erforderlich ist, was jedoch nicht vor Ort durchgeführt wird. Dadurch werden Wartungs- und Reparaturarbeiten deutlich erleichtert. Darüber hinaus ermöglicht die erfindungsgemäße Anordnung der Kopplungsvorrichtung auch noch eine besonders einfache Montage der Windkraftanlage, weil zunächst das Rotorlager über die Rotorwelle geschoben werden kann, und erst danach das Verbindungselement mit dem Befestigungselement formschlüssig an der Rotorwelle befestigt werden muß.

Zur weiteren Vereinfachung der Montage- und Wartungsarbeiten hat es sich als besonders günstig erwiesen, wenn das reibschlüssig mit dem Verbindungselement verbundene weitere Verbindungselement mit mindestens einem weiteren zur Herstellung einer formschlüssigen Verbindung ausgelegten Befestigungselement an der Getriebewelle befestigt ist. In diesem Fall kann bei der Montage zunächst das Getriebelager auf die Getriebewelle aufgeschoben und erst danach die Befestigung des weiteren Verbindungselementes an der Getriebewelle und die reibschlüssige Verbindung der einzelnen Verbindungselemente miteinander bewirkt wird.

Im Hinblick auf die Vermeidung einer übermäßigen Belastung der reibschlüssigen Verbindung bei Übertragung großer Drehmomente hat es sich als besonders günstig erwiesen, wenn mindestens ein Kopplungselement in radialer Richtung außerhalb der Mantelfläche der Rotorwelle angeordnet ist, so daß selbst bei Übertragung großer Drehmomente aufgrund der vergleichsweise großen Entfernung dieses Kopplungselementes von der Drehachse nur geringe Kräfte auf dieses Kopplungselement einwirken. Bei der zuletzt beschriebenen Ausführungsform der Erfindung weist das Verbindungselement zweckmäßigerweise einen im wesentlichen rotationssymetrischen und an der Stirnfläche der an ihrem der Getriebewelle zugewandten Ende stumpf auslaufenden Rotorwelle befestigten Flansch auf, der einen größeren Durchmesser als die Rotorwelle besitzt.

Zur Herstellung einer formschlüssigen Verbindung zwischen diesem Verbindungselement und der Rotorwelle kann ein Befestigungselement in Form einer das Verbindungselement durchsetzenden und in die der Getriebewelle zugewandte Stirnfläche der Rotorwelle eingesetzten Spannhülse verwendet werden. Das weitere, ebenfalls zweckmäßigerweise in Form eines im wesentlichen rotationssymetrischen und einen größeren Durchmesser als die Rotorwelle und/oder die Getriebewelle aufweisenden Flansches ausgeführte Verbindungselement kann ebenfalls mit einem dieses Verbindungselement durchsetzenden und in den der Rotorwelle zugewandten, vorzugsweise radial erweiterten Endbereich der Getriebewelle eingesetzten Spannhülse formschlüssig an der Getriebewelle befestigt werden.

Wenn mindestens eine in die Stirnfläche der Rotorwelle eingesetzte Spannhülse koaxial zu einer in den Endbereich der Getriebewelle eingesetzten Spannhülse verläuft, kann eine Vorspannung der Verbindung zwischen der Rotorwelle, den Verbindungselementen und der Getriebewelle mit Hilfe eines weiteren, diese Spannhülse durchsetzenden und zur Herstellung einer reibschlüssigen Verbindung zwischen der Rotorwelle und der Getriebewelle ausgelegten Kopplungselementes, das zweckmäßigerweise in Form eines in die Rotorwelle oder in die Getriebewelle eingesetzten Schraubbolzens ausgeführt ist, erzeugt werden. Mit Hilfe dieses vorzugsweise in Form eines Schraubbolzens ausgeführten weiteren Kopplungselementes können auch die Biegemomente von der Rotorwelle auf die Getriebewelle übertragen werden, um so die ggf. radial nach außen verlagerten Kopplungselemente zu entlasten. Diese Kopplungselemente können ebenfalls in Form von Kopplungsbolzen, insbesondere Schraubbolzen, mit etwa parallel zur Längsachse der Rotorwelle verlaufenden Bolzenachsen ausgeführt sein, wobei mindestens eines der radial nach außen verlagerten Kopplungselemente das Verbindungselement und/oder das weitere Verbindungselement durchsetzt.

Im Hinblick auf den Erhalt einer möglichst symetrischen Kräfteinleitung bei gleichzeitiger Sicherstellung einer zuverlässigen Drehmomentübertragung hat es sich als besonders zweckmäßig erwiesen, wenn die Kopplungseinrichtung eine Mehrzahl von vorzugsweise in gleichbleibenden Abständen in Umfangsrichtung der Rotorwelle verteilt angeordneten Kopplungselementen aufweist, von denen jedes im selben radialen Abstand von der Drehachse der Rotorwelle angeordnet sein kann.

Zur Vermeidung der Übertragung von Biegemomenten auf die zur Drehmomentübertragung eingesetzten Kopplungselemente hat es sich als zweckmäßig erwiesen, wenn das Verbindungselement und/oder das weitere Verbindungselement aus einem schwächeren Material besteht und/oder leichter verformbar ist als die Rotorwelle, die Getriebewelle und/oder der Befestigungsbolzen, weil bei dieser Konstruktion Biegemomente in erster Linie von den Wellen bzw. weiteren Kopplungselementen aufgenommen werden und vor ihrer Übertragung auf die Kopplungselemente zunächst zu einer Verformung der Verbindungselemente führen. Dabei kann eine leichtere Verformbarkeit nicht nur durch entsprechende Materialwahl, sondern auch durch eine entsprechende geometrische Gestaltung der Verbindungselemente erreicht werden. Diese geometrische Gestaltung kann Profilierungen der Verbindungselemente aufweisen und/oder Sollbiegestellen in den Verbindungselementen hervorbringen.

Bei der Ausführung von Reparatur- bzw. Wartungsarbeiten an einer Windkraftanlage muß der Rotor festgestellt werden, um so das Verletzungsrisiko bei Reparatur- und Wartungsarbeiten zu reduzieren. Zu diesem Zweck weist die Kopplungseinrichtung der erfindungsgemäßen Vorrichtung bei einer bevorzugten Ausführungsform der Erfindung eine Arretieranordnung zum Arretieren der Rotorwelle und damit auch der davon getragenen Rotorblätter auf. Diese Arretierung kann mit einem radialen und/oder axialen Formschluß erreicht werden.

Wenngleich auch an die Verwirklichung von Arretieranordnungen gedacht ist, mit denen der Rotor in jeder beliebigen Drehstellung arretiert werden kann, hat es sich im Sinne einer Erleichterung der Wartungsarbeiten durch Schaffung definierter geometrischer Verhältnisse als besonders günstig erwiesen, wenn die Arretieranordnung mindestens ein Arretierelement zum Arretieren der Rotorwelle in mindestens einer vorgegebenen Drehstellung aufweist. Dieses Arretierelement kann mindestens eine bezüglich der Rotorwelle radial nach außen weisende Arretieröffnung umfassen, in die zum Arretieren des Rotors ein Arretierbolzen eingeschoben wird.

Zum Erhalten einer möglichst symetrischen Gesamtanordnung weist die Arretieranordnung zweckmäßigerweise einen das Verbindungselement und/oder das weitere Verbindungselement umlaufenden und vorzugsweise an dem lösbar an der Rotorwelle befestigten Verbindungselement festgelegten Arretierring auf. Bei dieser bevorzugten Arretieranordnung kann die Rotorwelle ohne Beeinträchtigung der Lösung der Getriebewelle davon arretiert werden. Mit einem das Verbindungselement umlaufenden Arretierring kann eine Arretierung der Rotorwelle in einer Vielzahl von vorgegebenen Drehstellungen verwirklicht werden, wenn der Arretierring eine Mehrzahl von in Umfangsrichtung der Rotorwelle hintereinander angeordneten Arretierelementen, wie etwa Arretieröffnungen, aufweist.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:

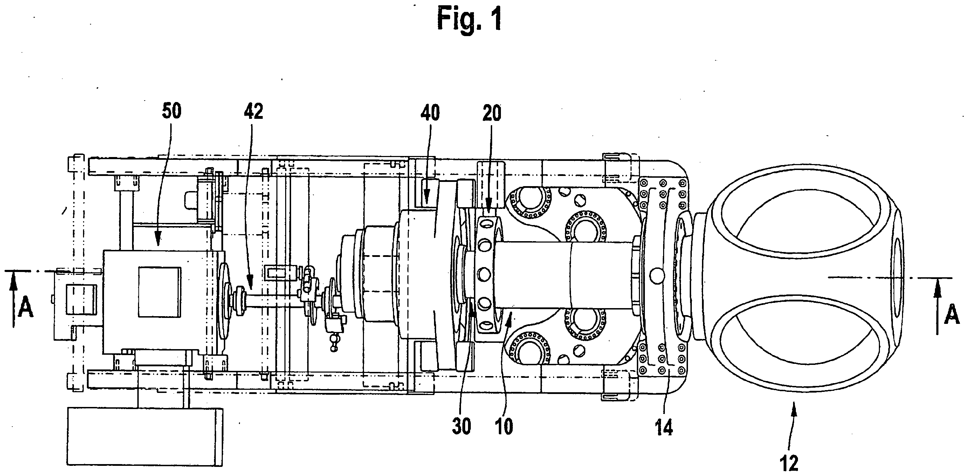

- Fig. 1: eine Aufsicht eines Maschinengehäuses mit einer erfindungsgemäßen Drehmomentübertragungsvorrichtung,
- Fig. 2: eine Schnittdarstellung des Maschinengehäuses mit der Drehmomentübertragungsvorrichtung gemäß Fig. 1 längs der Schnittebene A-A in Fig. 1
- Fig. 3: eine Schnittdarstellung des in Fig. 1 dargestellten Maschinengehäuses mit der Drehmomentübertragungsvorrichtung längs der in Fig. 2 eingezeichneten Schnittebene C-C und
- Fig. 4: eine Detaildarstellung des in Fig. 2 mit X bezeichneten Kopplungsbereichs zwischen der Rotorwelle und der Getriebewelle.

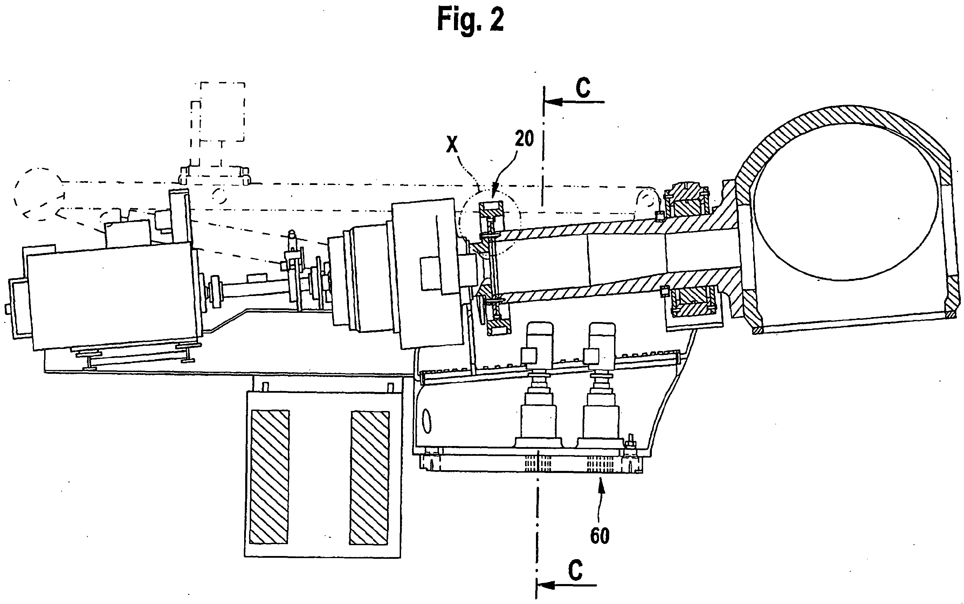

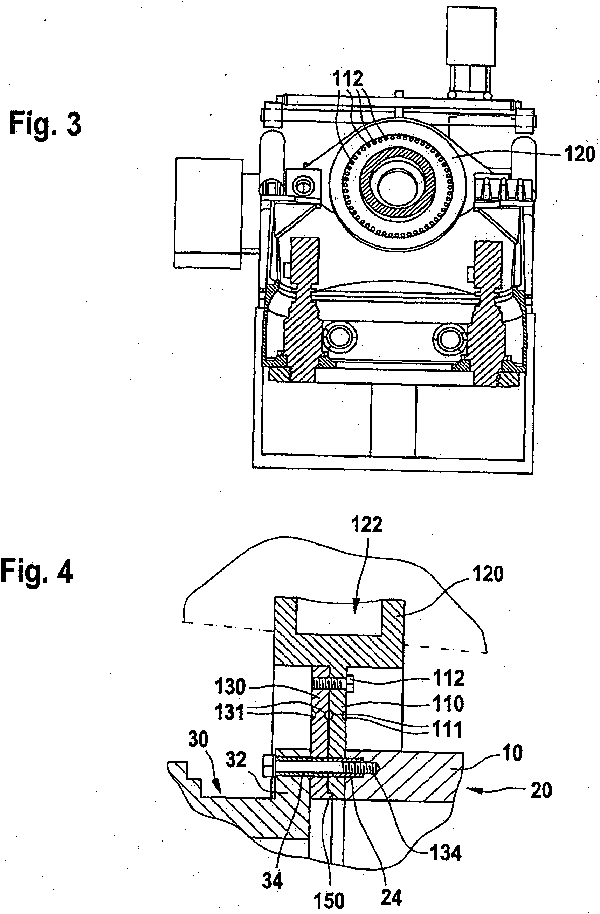

Die in der Zeichnung dargestellte Drehmomentübertragungsvorrichtung umfaßt eine als Hohlwelle (vgl. Fig. 2) ausgeführte Rotorwelle 10. Diese Rotorwelle 10 ist an ihrem einen Ende mit einer Nabe 12 des Rotors verbunden, wobei diese Nabe 12 insgesamt drei Ausnehmungen zum Aufnehmen jeweils eines Rotorblattes aufweist. Im Bereich des mit der Nabe 12 verbundenen Endes ist die Rotorwelle 10 mit einem diese umlaufenden Lager 14 drehbar gelagert. An ihrem der Nabe 12 entgegengesetzten Ende ist die Rotorwelle 10 mit der Eingangswelle 30 eines Getriebes 40 verbunden. Zu diesem Zweck ist eine in Fig. 4 im Detail dargestellte Kopplungseinrichtung 20 vorgesehen. Die Ausgangswelle 42 des Getriebes 40 ist mit einem Generator 50 verbunden. Das Lager 14, die Kopplungseinrichtung 20, das Getriebe 40 und der Generator 50 sind in einem mit Hilfe eines insgesamt mit 60 bezeichneten Drehlagers drehbar auf dem Turm (nicht dargestellt) einer Windkraftanlage gelagert.

Wie besonders deutlich in Fig. 4 dargestellt ist, weist die Getriebewelle 30 an ihrem der Rotorwelle 10 zugewandten Ende einen nach Art eines Flansches radial erweiterten Endbereich 32 auf. Die Kopplungseinrichtung 20 umfaßt im wesentlichen einen ersten Flansch 110, einen zweiten Flansch 130 sowie eine Vielzahl von den ersten Flansch 110 mit dem zweiten Flansch 130 verbindenden Kopplungselementen 112. Der Flansch 110 ist mit einer Vielzahl von in Umfangsrichtung hintereinander angeordneten und den Flansch 110 durchsetzenden und in die der Getriebewelle 30 zugewandte Stirnfläche der Rotorwelle 10 eingesetzten Spannhülsen 24 an der Rotorwelle 10 befestigt. Ebenso ist der Flansch 130 mit einer Vielzahl von in Umfangsrichtung hintereinander angeordneten, diesen Flansch 130 durchsetzenden und in den radial erweiterten Endbereich der Getriebewelle 30 eingesetzten Spannhülsen 34 an der Getriebewelle 30 befestigt. Die Kombination aus Rotorwelle 10 und zugehörigem Flansch 110 sowie Getriebewelle 30 und zugehörigem Flansch 130 werden vorzugsweise in einer gemeinsamen Aufspannung bearbeitet, um eine optimale Tragfähigkeit der Spannhülsen 24 bzw. 34 zu gewährleisten. Die Spannhülsen 24 und 34 sind jeweils koaxial zueinander angeordnet. Zur Herstellung einer reibschlüssigen, Biegemomente aufnehmenden Verbindung zwischen der Rotorwelle 10 und der Getriebewelle 30 sind eine Vielzahl von jeweils eine der Spannhülsen 34 und24 durchsetzenden Schraubbolzen 134 vorgesehen, welche in die der Getriebewelle zugewandte Stirnfläche der Rotorwelle eingeschraubt sind. Dabei werden mit den Spannhülsen 24 und 34 Drehmomente von der Rotorwelle 10 auf den Flansch 110 bzw. von dem Flansch 130 auf die Getriebewelle 30 übertragen, während mit den Schraubbolzen 134 die Biegemomente übertragen werden. Der Flansch 110 weist einen größeren Durchmesser auf als die Rotorwelle 10 und liegt an einer der Getriebewelle 30 zugewandten Stirnfläche dieser Rotorwelle 10 an. An einer radial außerhalb der Mantelfläche der Rotorwelle 10 liegenden Stelle ist der Flansch 110 mit Hilfe der als Schraubbolzen gebildeten Kopplungselemente 112 an dem Flansch 130 befestigt. Weiterhin sind die Flansche 110 und 130 durch einen Zentriersitz 150 gegenseitig zentriert.

Bei einer Drehung der Rotorwelle 10 wird das daraus resultierende Drehmoment zunächst über die Spannhülsen 24 auf den Flansch 110, dann über die Kopplungselemente 112 auf den Flansch 130 und schließlich über die Spannhülsen 34 auf die Getriebewelle 30 übertragen. Dabei findet die Drehmomentübertragung zwischen dem der Rotorwelle 10 zugeordneten Flansch 110 und dem der Getriebewelle 30 zugeordneten Flansch 130 an einer radial außerhalb der Mantelfläche der Rotorwelle 10 liegenden Stelle statt und ist so mit einer mit dem Abstand zwischen dem Kopplungselement 112 und der Rotorachse kleiner werdenden Kraft auf die Kopplungselemente 112 verbunden. Dadurch wird erreicht, daß diese Kopplungselemente 112 während des Betriebs der Windkraftanlage auch bei der Übertragung großer Drehmomente nicht von übermäßigen Kräften beaufschlagt werden. Zur Vermeidung der Übertragung von Biegemomenten auf die Kopplungselemente 112 sind die Flansche 110 und 130 mit Profilierungen 111 bzw. 131 versehen, welche Sollbiegestellen in dem Flansch 110 und 130 bilden, so daß ggf. auftretenden Biegemomente von den Schraubbolzen 134 übertragen werden, wogegen die Kopplungselemente 112 durch elastische Verformung der Flansche 110, 130 von Biegelast freigehalten werden. Alternativ oder zusätzlich können die Flansche 110 und 130 auch aus einem in Vergleich zur Rotorwelle 10, Getriebewelle 30 und dem Befestigungsbolzen 134 schwächeren Material gebildete sein, um so eine Übertragung der während des Betriebes einer Windkraftanlage auftretende Biegemomente auf die Kopplungselemente zu vermeiden.

Der Flansch 110 wird von einem Arretierring 120 umlaufen, der eine Vielzahl von radial nach außen weisenden Arretieröffnungen 122 aufweist. In diese Arretieröffnungen können zum Arretieren der Rotorwelle in einer vorgegebenen Drehstellung in der Zeichnung nicht dargestellte Arretierbolzen eingesetzt werden. Dabei wird durch die radial außen liegende Anordnung der Arretieröffnungen erreicht, daß zum Arretieren der Rotorwelle nur eine vergleichsweise geringe Kraft benötigt wird. Wie in Fig. 4 dargestellt weist die innere Begrenzungsfläche des Arretierrings 120 etwa denselben Durchmesser auf wie der lösbar an der Getriebewelle 30 festgelegte Flansch 130.

Mit der anhand der Zeichnung erläuterten Kopplungseinrichtung kann das Getriebe 40 ohne nennenswerte Horizontalbewegung der Rotorwelle 10 und/oder des Getriebes 40 selbst von der Rotorwelle 10 gelöst werden. Vielmehr müssen die voneinander zu lösenden Einheiten nur um einen der axialen Länge des Zentriersitzes 150 entsprechenden Abstand horizontal auseinandergerückt werden. Ferner ist diese Lösung der Rotorwelle 10 von der Getriebewelle 30 bzw. die Montage der Rotorwelle 10 an der Getriebewelle 30 mit einem vergleichsweise geringen Arbeitsaufwand verbunden, weil dazu nur die als Schraubbolzen ausgebildeten Kopplungselemente 112 und die ebenfalls als Schraubbolzen ausgebildeten Befestigungselemente 134 gelöst bzw. festgezogen werden müssen. Ferner kann die Verbindung auch nach einer vergleichsweise langen Betriebszeit ohne Schwierigkeiten gelöst werden. Ferner bietet die anhand der Zeichnung erläuterte Vorrichtung konstruktive Vorteile, weil die Arretieranordnung für den Rotor in die Kopplungseinrichtung 20 integriert ist und aus diesem Grund kein zusätzliches Material bzw. keine zusätzliche Masse für die Verwirklichung der Arretieranordnung benötigt wird. Auch eröffnet die erfindungsgemäße Vorrichtung die Möglichkeit, die Rotorwelle als Hohlwelle auszubilden.

Die Erfindung ist nicht auf das anhand der Zeichnung erläuterte Ausführungsbeispiel beschränkt. Insbesondere ist auch an solche Ausführungen gedacht, bei denen anstelle der Hohlwelle auch eine massive Welle eingesetzt ist. Auch können anstelle der Arretieröffnungen Arretierbolzen an den Arretierringen 120 vorgesehen sein, welche mit entsprechenden Arretierhülsen zusammenwirken.

## Patentansprüche

1. Kopplungsvorrichtung für eine Windkraftanlage mit einer mindestens ein Rotorblatt der Windkraftanlage tragenden Rotorwelle (10), einer koaxial zur Rotorwelle (10) verlaufenden Getriebewelle (30) und einer die Rotorwelle (10) an die Getriebewelle (30) koppelnden Kopplungseinrichtung (20), **dadurch gekennzeichnet, daß** die Kopplungseinrichtung (20) mindestens ein mit einem zur Herstellung einer formschlüssigen Verbindung ausgelegten Befestigungselement (24) lösbar an der Rotorwelle (10) befestigtes Verbindungselement (110) und ein zur Herstellung einer reibschlüssigen Verbindung zwischen dem Verbindungselement (110) einerseits und einem weiteren Verbindungselement (130) und/oder der Getriebewelle (30) andererseits ausgelegtes Kopplungselement (112) aufweist.

2. Kopplungsvorrichtung nach Anspruch 1, **dadurch gekennzeichnet, daß** das weitere Verbindungselement (130) mit mindestens einem weiteren zur Herstellung einer formschlüssigen Verbindung ausgelegten Befestigungselement (34) an der Getriebewelle (30) befestigt ist.

3. Kopplungsvorrichtung nach Anspruch 1 oder 2, **dadurch gekennzeichnet, daß** mindestens ein Kopplungselement (112) in radialer Richtung außerhalb der Mantelfläche der Rotorwelle (10) angeordnet ist.

4. Kopplungsvorrichtung nach einem der Ansprüche 1 bis 3, **dadurch gekennzeichnet, daß** das Verbindungselement (110) einen im wesentlichen rotationssymetrischen und an der Stirnfläche der an ihrem der Getriebewelle (30) zugewandten Ende stumpf auslaufenden Rotorwelle (10) befestigten Flansch (110) aufweist, der einen größeren Durchmesser besitzt als die Rotorwelle (10).

5. Kopplungsvorrichtung nach einem der Ansprüche 1 bis 4, **dadurch gekennzeichnet, daß** mindestens ein Befestigungselement (24) eine das Verbindungselement (110) durchsetzende und in die der Getriebewelle (30) zugewandte Stirnfläche der Rotorwelle (10) eingesetzte Spannhülse (24) ist.

6. Kopplungsvorrichtung nach einem der Ansprüche 2 bis 5, **dadurch gekennzeichnet, daß** mindestens ein weiteres Befestigungselement (34) eine das weitere, vorzugsweise ebenfalls flanschförmige Verbindungselement (130) durchsetzende und in den der Rotorwelle (10) zugewandten, vorzugsweise radial erweiterten Endbereich (32) der Getriebewelle (30) eingesetzte Spannhülse (34) ist.

7. Kopplungsvorrichtung nach den Ansprüche 5 und 6, **dadurch gekennzeichnet, daß** mindestens eine in die Stirnfläche der Rotorwelle (10) eingesetzte Spannhülse (24) koaxial zu einer in den Endbereich (32) der Getriebewelle eingesetzten Spannhülse (34) verläuft und diese Spannhülsen von einem weiteren zur Herstellung einer reibschlüssigen Verbindung zwischen der Rotorwelle (10) und der Getriebewelle (30) ausgelegten Kopplungselement (134) durchsetzt sind.

8. Kopplungsvorrichtung nach einem der vorhergehenden Ansprüche, **dadurch gekennzeichnet, daß** mindestens eines der Kopplungselemente (112, 134) ein Kopplungsbolzen, insbesondere Schraubbolzen, mit einer etwa parallel zur Längsachse der Rotorwelle (10) verlaufenden Bolzenachse ist.

9. Kopplungsvorrichtung nach einem der vorhergehenden Ansprüche, **dadurch gekennzeichnet, daß** mindestens eines der Kopplungselemente (112, 134) das Verbindungselement und/oder das weitere Verbindungselement (130) durchsetzt.

10. Kopplungsvorrichtung nach einem der vorhergehenden Ansprüche, **gekennzeichnet durch** eine Mehrzahl von vorzugsweise in gleichbleibenden Abständen in Umfangsrichtung der Rotorwelle hintereinander angeordneten Kopplungselementen.

11. Kopplungsvorrichtung nach einem der Ansprüche 2 bis 10, **dadurch gekennzeichnet, daß** das Verbindungselement (110) und/oder das weitere Verbindungselement (130) aus einem schwächeren Material besteht und/oder leichter verformbar ist als die Rotorwelle, die Getriebewelle und/oder der Befestigungsbolzen.

12. Kopplungsvorrichtung nach einem der vorhergehenden Ansprüche, **dadurch gekennzeichnet, daß** die Kopplungseinrichtung (20) eine Arretieranordnung zum Arretieren der Rotorwelle (10) aufweist.

13. Kopplungsvorrichtung nach Anspruch 12, **dadurch gekennzeichnet, daß** die Arretieranordnung mindestens ein Arretierelement (122) zum Arretieren der Rotorwelle (130) in mindestens einer vorgegebenen Drehstellung aufweist.

14. Kopplungsvorrichtung nach Anspruch 13, **dadurch gekennzeichnet, daß** mindestens ein Arretierelement eine bezüglich der Rotorwelle (10) radial nach außen weisende Arretieröffnung (122) aufweist.

15. Kopplungsvorrichtung nach einem der Ansprüche 12 bis 14, **dadurch gekennzeichnet, daß** die Arretieranordnung einen das Verbindungselement (110) und/oder das weitere Verbindungselement (130) umlaufenden und vorzugsweise an dem Verbindungselement (110) festgelegten Arretierring (120) aufweist.

16. Kopplungsvorrichtung nach Anspruch 15, **dadurch gekennzeichnet, daß** der Arretierring (120) eine Mehrzahl von in Umfangsrichtung hintereinander angeordneten Arretierelementen, insbesondere Arretieröffnungen (122), aufweist.

17. Windkraftanlage mit einer Kopplungsvorrichtung nach einem der vorhergehenden Ansprüche.

## Claims

1. Coupling device for a wind power plant with a rotor shaft (10) that carries at least one rotor blade of the wind power plant, a gear shaft (30) running coaxially to the rotor shaft (10) and a coupling device (20) coupling the rotor shaft (10) to the gear shaft (30), **characterized in that** the coupling device (20) has at least one connection element (110) that can be detachably affixed on the rotor shaft (10) to an attachment element (24) designed to create a positive locking connection, and one coupling element (112) designed to create a friction-fit connection between the connection element (110), on the one hand, and an additional connection element (130) and/or the gear shaft (30), on the other hand.

2. Coupling device according to claim 1, **characterized in that** the additional connection element (130) is affixed to at least one additional attachment element (34) on the gear shaft (30) designed to create a positive locking connection.

3. Coupling device according to claim 1 or 2, **characterized in that** at least one coupling element (112) is arranged in the radial direction outside of the sheath surface of the rotor shaft (10).

4. Coupling device according to any one of the claims 1 to 3, **characterized in that** the connection element (110) has a flange (110) that is essentially rotationally symmetric and is attached to the end face of the rotor shaft (10) which becomes flush at its end that faces the gear shaft (30), and that the flange (110) has a larger diameter than the rotor shaft (10).

5. Coupling device according to any one of the claims 1 to 4, **characterized in that** at least one attachment element (24) is a clamping sleeve (24) that passes through the connection element (110) and is inserted into the end face of the rotor shaft (10) which faces the gear shaft (30).

6. Coupling device according to any one of the claims 2 to 5, **characterized in that** at least one additional attachment element (34) is a clamping sleeve (34) that passes through the additional connection element (130), also preferably in the form of a flange, and is inserted in the end area (32) of the gear shaft (30) which faces the rotor shaft (10) and is preferably radially expanded.

7. Coupling device according to claims 5 and 6, **characterized in** at least one clamping sleeve (24) inserted into the end face of the rotor shaft (10) runs coaxially to a clamping sleeve (34) that is inserted into the end area (32) of the gear shaft, and these clamping sleeves are passed through by an additional coupling element (134) that is designed to produce a friction-fit connection between the rotor shaft (10) and the gear shaft (30).

8. Coupling device according to any one of the preceding claims, **characterized in that** at least one of the coupling elements (112, 134) is a coupling bolt, in particular, a screwed bolt, with a bolt axis running approximately parallel to the longitudinal axis of the rotor shaft (10).

9. Coupling device according to any one of the preceding claims, **characterized in that** at least one of the coupling elements (112, 134) passes through the connection element and/or the additional connection element (130).

10. Coupling device according to any one of the preceding claims, **characterized by** a plurality of coupling elements preferably arranged at equal distances one behind the other in the circumferential direction of the rotor shaft.

11. Coupling device according to any one of the claims 2 to 10, **characterized in that** the connection element (110) and/or the additional connection element (130) are made of a weaker material and/or can be more easily deformed than the rotor shaft, the gear shaft and/or the attachment bolt.

12. Coupling device according to any one of the preceding claims, **characterized in that** coupling device (20) has a locking arrangement for stopping the rotor shaft (10).

13. Coupling device according to claim 12, **characterized in that** the locking arrangement has at least one locking element (122) for locking the rotor shaft (130) in at least one prespecified rotational position.

14. Coupling device according to claim 13, **characterized in that** at least one locking element has a locking opening (122) facing radially outwards relative to the rotor shaft (10).

15. Coupling device according to any one of the claims 12 to 14, **characterized in that** the locking arrangement has a locking ring (120) that surrounds the connection element (110) and/or the additional connection element (130) and is preferably affixed to the connection element (110).

16. Coupling device according to claim 15, **characterized in that** the locking ring (120) has a plurality of locking elements, particularly locking openings (122), that are arranged one behind the other in the circumferential direction.

17. Wind power plant with a coupling device according to any one of the preceding claims.

## Revendications

1. Dispositif de couplage pour une éolienne comprenant un arbre de rotor (10) portant au moins une pale de rotor de l'éolienne, un arbre de transmission (30) au tracé coaxial à l'arbre de rotor (10) et un dispositif de couplage (20) couplant l'arbre de rotor (10) à l'arbre de transmission (30), **caractérisé en ce que** le dispositif de couplage (20) présente au moins un élément de liaison (110) fixé de manière détachable à l'arbre de rotor (10) au moyen d'un élément de fixation (24) conçu pour réaliser une liaison par obstacle et un élément de couplage (112) conçu pour réaliser une liaison par adhérence entre l'élément de liaison (110) d'une part et un élément de fixation (130) supplémentaire et/ou l'arbre de transmission (30) d'autre part.

2. Dispositif de couplage selon la revendication 1, **caractérisé en ce que** l'élément de liaison (130) supplémentaire est fixé à l'arbre de transmission (30) au moyen d'au moins un élément de fixation (34) supplémentaire conçu pour réaliser une liaison par obstacle.

3. Dispositif de couplage selon la revendication 1 ou 2, **caractérisé en ce qu'**au moins un élément de couplage (112) est disposé en direction radiale en dehors de la surface de virole de l'arbre de rotor (10).

4. Dispositif de couplage selon l'une des revendications 1 à 3, **caractérisé en ce que** l'élément de liaison (110) présente une bride (110) sensiblement symétrique en rotation et fixée à la face frontale de l'arbre de rotor (10) se terminant en forme conique à son extrémité tournée vers l'arbre de transmission (30), laquelle bride possède un diamètre plus grand que l'arbre de rotor (10).

5. Dispositif de couplage selon l'une des revendications 1 à 4, **caractérisé en ce qu'**au moins un élément de fixation (24) est une douille de serrage (24) traversant l'élément de liaison (110) et insérée dans la face frontale de l'arbre de rotor (10) qui est tournée vers l'arbre de transmission (30).

6. Dispositif de couplage selon l'une des revendications 2 à 5, **caractérisé en ce qu'**au moins un élément de fixation (34) supplémentaire est une douille de serrage (3) traversant l'élément de liaison (130) supplémentaire, qui est de préférence également en forme de bride, et insérée dans la zone terminale (32) de l'arbre de transmission (30) qui est tournée vers l'arbre de rotor (10) et de préférence étendue radialement.

7. Dispositif de couplage selon les revendications 5 et 6, **caractérisé en ce qu'**au moins une douille de serrage (24) insérée dans la face frontale de l'arbre de rotor (10) présente un tracé coaxial à une douille de serrage (34) insérée dans la zone terminale (32) de l'arbre de transmission et ces douilles de serrage sont traversées par un élément de couplage (134) supplémentaire conçu pour réaliser une liaison par adhérence entre l'arbre de rotor (10) et l'arbre de transmission (30).

8. Dispositif de couplage selon l'une des revendications précédentes, **caractérisé en ce qu'**au moins un des éléments de couplage (112, 134) est un boulon de couplage, en particulier un boulon à visser, présentant un axe de boulon sensiblement parallèle à l'axe longitudinal de l'arbre de rotor (10).

9. Dispositif de couplage selon l'une des revendications précédentes, **caractérisé en ce qu'**au moins un des éléments de couplage (112, 134) traverse l'élément de liaison et/ou l'élément de liaison (130) supplémentaire.

10. Dispositif de couplage selon l'une des revendications précédentes, **caractérisé par** une pluralité d'éléments de couplage disposés l'un derrière l'autre, de préférence à intervalles constants, en direction circonférentielle de l'arbre de rotor.

11. Dispositif de couplage selon l'une des revendications 2 à 10, **caractérisé en ce que** l'élément de liaison (110) et/ou l'élément de liaison (130) supplémentaire est composé d'un matériau plus faible et/ou est plus facilement déformable que l'arbre de rotor, l'arbre de transmission et/ou le boulon de fixation.

12. Dispositif de couplage selon l'une des revendications précédentes, **caractérisé en ce que** le dispositif de couplage (20) présente un agencement d'arrêt destiné à arrêter l'arbre de rotor (10).

13. Dispositif de couplage selon la revendication 12, **caractérisé en ce que** l'agencement d'arrêt présente au moins un élément d'arrêt (122) destiné à arrêter l'arbre de rotor (130) dans au moins une position de rotation prédéfinie.

14. Dispositif de couplage selon la revendication 13, **caractérisé en ce qu'**au moins un élément d'arrêt présente une ouverture d'arrêt (122) tournée radialement vers l'extérieur par rapport à l'arbre de rotor (10).

15. Dispositif de couplage selon l'une des revendications 12 à 14, **caractérisé en ce que** l'agencement d'arrêt présente une bague d'arrêt (120) entourant l'élément de liaison (110) et/ou l'élément de liaison (130) supplémentaire et de préférence fixée au niveau de l'élément de liaison (110).

16. Dispositif de couplage selon la revendication 15, **caractérisé en ce que** la bague d'arrêt (120) présente une pluralité d'éléments d'arrêt, en particulier d'ouvertures d'arrêt (122), disposés l'un derrière l'autre en direction circonférentielle.

17. Éolienne comprenant un dispositif de couplage selon l'une des revendications précédentes.
